# EUROPÄISCHE PATENTSCHRIFT

(11) **EP 1 398 550 B1**
(45) Veröffentlichungstag und Bekanntmachung des Hinweises auf die Patenterteilung: **24.05.2006**
(21) Anmeldenummer: 02020302.2
(22) Anmeldetag: 11.09.2002
(51) Int. Cl.: F16K 5/06, F16K 41/10

(54) **Absperrvorrichtung zum Absperren und/oder Abdichten einer Leitung**
Shut-off device to shut-off and /or to seal a conduit
Dispositif d'arrêt pour fermer et/ou obturer un conduit

(43) Veröffentlichungstag der Anmeldung: 17.03.2004
(73) Patentinhaber: Voest-Alpine Industrieanlagenbau GmbH & Co, 4031 Linz (AT)
(72) Erfinder: Dreier, Rainer, 3335 Weyer (AT); Silbernagl, Herbert, 3300 Amstetten (AT)
(74) Vertreter: Kunz, Ekkehard

(56) Entgegenhaltungen:
- DE-A- 19 535 204
- FR-E- 77 939
- US-A- 3 281 112
- US-A- 4 293 163
- US-A- 5 193 780

## Beschreibung

Die Erfindung betrifft eine Absperrvorrichtung zum Absperren und/oder Abdichten einer Leitung zum Transport von, vorzugsweise heißen, Medien, insbesondere staubbeladenen Gasen, vorzugsweise zur Absperrung und/oder Abdichtung einer Leitung zum Transport heißer, gegebenenfalls mit Feststoffpartikel beladener, Gase, mit einem beweglichen Verschlusskörper und mindestens einem Dichtelement, insbesondere einem Sitzring, an dem der Verschlusskörper in Sperrstellung anliegt, und mit einer Einrichtung zur Rotation des Verschlusskörpers um eine Rotationsachse, insbesondere einer Welle, mit welcher der Verschlusskörper verbunden ist.

Aus dem Stand der Technik sind verschiedene Absperrvorrichtungen bekannt, die nur bedingt zu einem Transport eines heißen, gegebenenfalls mit Feststoffpartikeln beladenen, Gases geeignet sind. Durch das heiße mit den Feststoffteilchen beladene Gas erfolgt im Allgemeinen eine starke Beeinträchtigung der Verschluss- und/oder Abdichtwirkung der aus dem Stand der Technik bekannten Absperrvorrichtungen.

Dokument US 5 193 780 A beschreibt eine Absperrvorrichtung (Kugelhahn) mit einer Anlenkung an die Einrichtung zur Rotation des Verschlußkörper in einer Richtung normal zur Rotationsachse.

Dieses Dokument wird als nächstliegender Stand der Technik gesehen und korrespondiert mit den Merkmalen der Oberbegriffe der Ansprüche 1 und 12.

Es ist eine Aufgabe der vorliegenden Erfindung eine Absperrvorrichtung nach dem Oberbegriff des Anspruch 1 sowie ein Verfahren zum Betrieb einer Absperrvorrichtung nach dem Oberbegriff des Anspruchs 12 weiter zu entwickeln, so dass ein wirtschaftlicherer Einsatz einer solchen Absperrvorrichtung sowie eines solchen Verfahrens bei einem Transport eines heißen, gegebenenfalls mit, insbesondere feinen, Feststoffpartikeln beladenen, Gases möglich ist.

Diese Aufgabe wird entsprechend der erfindungsgemäßen Vorrichtung nach dem kennzeichnenden Teil des Anspruch 1 sowie entsprechend dem erfindungsgemäßen Verfahren nach dem kennzeichnenden Teil des Anspruchs 12 gelöst.

Durch die erfindungsgemäße Vorrichtung und das erfindungsgemäße Verfahren ist gewährleistet, dass der Verschlusskörper sich in seiner Position und/oder Lage geeignet an den Dichtkörper anpassen kann. Diese Maßnahme ist insbesondere in dem Fall von großer Bedeutung, wenn durch Ablagerungen im Bereich des Verschlusskörpers und/oder des Dichtelements, beispielsweise durch eingetragene Feststoffpartikel, eine exakte Führung des Verschlusskörpers und damit eine Absperrung und/oder Abdichtung erschwert und/oderunmöglich wird.

Nach einem kennzeichnenden Merkmal der Erfindung ist die Position und/oder die Lage des Verschlusskörpers, vorzugsweise in Richtung der Wellenachse, durch einen, insbesondere an dem Verschlusskörper an einem Punkt in Richtung der Wellenachse angreifenden, während des Betriebes, insbesondere hydraulisch, betätigbaren Abstandhalter, insbesondere durch einen so genannten "ball-stopper", veränderbar ist.

Nach dem erfindungsgemäßen Merkmal ist damit eine flexible Positionierung des Verschlusskörpers möglich.

Durch das erfindungsgemäße Merkmal kann der Verschlusskörper nach einer bevorzugten Ausführungsform der Erfindung in seiner Lage und/oder Position gegenüber dem Dichtelement flexibel verändert, und somit eine verbesserte Abdichtleistung erreicht werden. Insbesondere kann durch diese Verstellmöglichkeit des Verschlusskörpers, vorzugsweise während des Betriebes, also bevorzugt während des Durchtrittes des heißen Gases, auf auftretende Anlagerungen an dem Verschlusskörper und/oder an dem Dichtelement reagiert und somit trotz der auftretenden Anlagerungen am Verschlusskörper im Bereich des Dichtelements eine zufrieden stellende Abschließ- bzw. Abdichtwirkung erzielt werden.

Nach einer Ausführungsform der erfindungsgemäßen Vorrichtung ist an der Einrichtung zur Betätigung, insbesondere Rotation, des Verschlusskörpers eine, vorzugsweise flexible und/oder staubdichte, Dichtung, insbesondere ein Wellenbalg, angeordnet, die einerseits mit der Einrichtung zur Betätigung des Verschlusskörpers und andererseits mit dem Verschlusskörper jeweils in einer Weise verbunden ist, dass die Verbindungsstelle zwischen dem Verschlusskörper und der ihn betätigenden Einrichtung durch die Dichtung abdichtbar ist. Nach einer weiteren besonderen Ausführungsform ist die verwendete Dichtung dabei aus einem besonders temperaturbeständigen Material hergestellt.

Nach einer zusätzlichen Ausführungsform der Erfindung wird durch die Dichtung die besonders beanspruchte Verbindungsstelle zwischen dem Verschlusskörper und der ihn betätigenden Einrichtung geschützt.

Nach einer besonderen Ausführungsform der Erfindung ist die Dichtung, insbesondere der Wellenbalg, durch eine Schweißverbindung und/oder eine andere, vorzugsweise staubdichte, Verbindung mit dem Verschlusskörper und/oder der Einrichtung zur Betätigung des Verschlusskörpers verbunden.

Nach einer besonderen Ausführungsform der erfindungsgemäßen Vorrichtung, wobei der Verschlusskörper an einer Seite eine Ausnehmung aufweist, in welche die Einrichtung zur Betätigung des Verschlusskörpers, insbesondere die Welle, und/oder ein Zwischenstück zur Verbindung der Einrichtung zur Betätigung des Verschlusskörpers mit dem Verschlusskörper eingreift, ist die Dichtung, insbesondere der Wellenbalg, derart angeordnet, dass ein Eintrag von Feststoffpartikeln in die Ausnehmung des Verschlusskörpers, insbesondere im Bereich des Eingriffes der Einrichtung zur Betätigung des Verschlusskörpers in die Ausnehmung des Verschlusskörpers, verhinderbar ist.

Bei dem erfindungsgemäßen Zwischenstück kann es sich beispielsweise um ein Metallstück, insbesondere eine Metallfeder, handeln, das durch Ausnehmungen an dem Verschlusskörper und der Einrichtung zur Betätigung des Verschlusskörpers positioniert, und durch Formschluss die Verbindung der beiden Bauteile herstellt.

Dadurch, dass ein Eintrag von Feststoffpartikeln in die Ausnehmung des Verschlusskörpers verhinderbar ist, wird gewährleistet, dass der Verschlusskörper nicht durch, insbesondere in die Ausnehmung eindringende, Verunreinigungen, beispielsweise Staub, in seiner Bewegung bzw. Beweglichkeit behindert werden kann. Da der Verschlusskörper nach einer besonderen Ausführungsform der erfindungsgemäßen Vorrichtung mit der ihn betätigenden Einrichtung, insbesondere einer Welle, zumeist nur in einer Richtung und/oder Ebene schlüssig verbunden ist, kann der Verschlusskörper auf eventuelle Ablagerungen an den Dichtelementen reagieren und seine Position verändern. Durch diese Maßnahme wird im Allgemeinen gewährleistet, dass der Verschlusskörper trotz Anlagerungen an den Dichtelementen die Absperrvorrichtung im Wesentlichen dicht abschließt. Würden demgegenüber beispielsweise Fremdkörper in die Ausnehmung des Verschlusskörpers, in welche die Welle eingreift, gelangen, würde die Bewegungsmöglichkeit des Verschlusskörpers wesentlich eingeschränkt. Ein weitgehend dichter, gegebenenfalls staubdichter und/oder gasdichter, Verschluss der Absperrvorrichtung könnte so nicht verwirklicht werden.

Nach einer weiteren bevorzugten Ausführungsform der erfindungsgemäßen Erfindung erfolgt die Verbindung des Verschlusskörpers mit der Einrichtung zur Betätigung des Verschlusskörpers, insbesondere der Welle, durch eine gelenkige Verbindung, beispielsweise durch Anwendung eines Kreuzgelenks. Auch nach dieser weiteren besonderen Ausführungsform der Erfindung ist eine Abdichtung der Verbindungsstelle zwischen der betätigten Einrichtung zur Betätigung des Verschlusskörpers, insbesondere der Welle, und dem Verschlusskörper selbst außerordentlich wichtig, da eindringende Medien, insbesondere Stäube oder andere Verunreinigungen, beispielsweise durch Bildung von Anlagerungen, zu einer wesentlichen Beeinträchtigung der Betätigbarkeit des Verschlusskörpers und/oder der Funktion der gelenkigen Verbindung führen können.

Nach einer besonderen Ausführungsform der erfindungsgemäßen Vorrichtung schließt die Dichtung den vorderen, dem Verschlusskörper zugewandten, Teil der Einrichtung zur Betätigung des Verschlusskörpers, insbesondere der Welle, zumindest teilweise gasdicht ab.

Nach einer besonderen Ausführungsform der erfindungsgemäßen Vorrichtung ist an der Einrichtung zur Betätigung des Verschlusskörpers, insbesondere an der Welle, ein Hohlraum, insbesondere eine Bohrung, vorgesehen, der mindestens zwei Öffnungen aufweist, wobei eine der Öffnungen im vorderen, dem Verschlusskörper zugewandten, Teil der Einrichtung zur Betätigung des Verschlusskörpers, insbesondere der Welle, angeordnet ist.

Nach einer besonderen Ausführungsform der erfindungsgemäßen Absperrvorrichtung ist der Verschlusskörper zumindest teilweise sphäroidisch und drehbar ausgeführt und weist einen Durchflusskanal auf.

Nach einer besonderen Ausführungsform der erfindungsgemäßen Absperrvorrichtung ist ein Fixierelement, beispielsweise eine Tellerfeder, vorgesehen, mit welcher das Dichtelement flexibel und/oder federnd gelagert ist.

Nach einer besonderen Ausführungsform der erfindungsgemäßen Vorrichtung ist die erste Öffnung im Bereich der abgedichteten Verbindung des Verschlusskörpers mit der ihn betätigenden Einrichtung angeordnet.

Nach einer besonderen Ausführungsform der erfindungsgemäßen Vorrichtung ist die zweite Öffnung des Hohlraumes durch einen Verschluss, insbesondere gasdicht, verschließbar.

Nach einer besonderen Ausführungsform der Erfindung ist der Verschlusskörper zumindest teilweise sphäroid und drehbar ausgeführt ist und weist gegebenenfalls einen Durchflusskanal auf.

Die Erfindung ist jedoch nicht auf einen sphäroiden Verschlusskörper eingeschränkt, und eignet sich auch für andere Verschlusskörper und Verschlussmechanismen.

Nach einer besonderen Ausführungsform der Erfindung weist die Absperrvorrichtung zumindest je einen, an dem entsprechenden Ende des Absperrventiles angeordneten und gegebenenfalls miteinander fluchtenden, Einlass- und Auslassstutzen auf, die wiederum jeweils einen äußeren und inneren Durchmesser aufweisen, wobei der äußere Durchmesser durch einen, gegebenenfalls metallischen, Mantel und der innere Durchmesser durch einen, gegebenenfalls metallischen, Inliner gebildet werden. Nach einer besonderen Ausführungsform der Erfindung ist zwischen dem Inliner und dem Mantel ein Isoliermaterial zur Temperaturisolierung, insbesondere ein Feuerfestmaterial, besonders bevorzugt eine Ausmauerung aus Feuerfestmaterial, angeordnet. Nach einer weiteren bevorzugten Ausführungsform ist, gegebenenfalls zusätzlich, im Bereich des Absperrventils ein Isoliermaterial angeordnet, um die entsprechenden Teile des Ventiles vor extremen, insbesondere besonders hohen, Temperaturen zu schützen.

Nach einer besonderen Ausführungsform der Erfindung handelt es sich bei dem Isoliermaterial um feuerfeste Gießmassen, vorzugsweise um Gießmassen mit einem hohen Aluminiumoxid-Anteil. Dieses Isoliermaterial hat sich in Versuchen als besonders zweckdienlich erwiesen.

Nach einer besonderen Ausführungsform der Erfindung wird der Inliner aus hochwarmfesten, verschleißfesten, insbesondere metallischen Material(len) hergestellt.

Durch die Anbringung eines feuerfesten Materials zwischen einem äußeren, zumeist metallischen, Mantel und einem Inliner, werden gegenüber dem Stand der Technik wesentlich längere Standzeiten der Absperrvorrichtung ermöglicht. Nach einer besonderen Ausführungsform der Erfindung eignet sich diese besondere Ausführungsform besonders zur Anwendung der Absperrvorrichtung in einer Anlage zum Transport eines heißen mit feinen Feststoffteilchen beladenen Gases, insbesondere zum Transport von, insbesondere heißen, Feinerzen in einer Reduktionsanlage zur Reduktion von Erzen.

Nach einer besonderen Ausführungsform der Erfindung ist zwischen dem metallischen Mantel und dem Inliner, vorzugsweise im Bereich des Absperrventiles, ein Verbindungselement, zur Abstützung des Inliners an dem metallischen Mantel, vorgesehen, wobei gegebenenfalls das Verbindungselement an dem Dichtelement anliegt und dieses zumindest teilweise abstützt.

Nach einer besonderen Ausführungsform der Erfindung ist ein Fixierelement, beispielsweise eine Tellerfeder, vorgesehen, mit welcher das Dichtelement flexibel und/oder federnd gelagert ist.

Die Erfindung ist weiters durch ein Verfahren gemäß Anspruch 13 gekennzeichnet.

Nach einer besonderen Ausführungsform des erfindungsgemäßen Verfahrens wird die Verbindungsstelle zwischen dem Verschlusskörper und der Einrichtung zur Betätigung des Verschlusskörpers durch eine, vorzugsweise flexible, Dichtung, insbesondere einen Wellenbalg, gegenüber der Umgebung, insbesondere zur Verhinderung des Eintrittes von Verunreinigungen, abgedichtet.

Nach einer besonderen Ausführungsform des erfindungsgemäßen Verfahrens wird an der Einrichtung zur Betätigung des Verschlusskörpers, insbesondere der Welle, ein Hohlraum, insbesondere eine Bohrung, angebracht, der mindestens zwei Öffnungen aufweist, wobei eine erste Öffnung im vorderen, dem Verschlusskörper zugewandten Teil der Einrichtung zur Betätigung des Verschlusskörpers, insbesondere der Welle, angeordnet wird.

Nach einer besonderen Ausführungsform des erfindungsgemäßen Verfahrens wird die erste Öffnung im Bereich der abgedichteten Verbindung des Verschlusskörpers mit der ihn betätigenden Einrichtung angeordnet.

Nach einer besonderen Ausführungsform des erfindungsgemäßen Verfahrens wird die zweite Öffnung des Hohlraumes durch einen Verschluss, insbesondere gasdicht, verschlossen.

Nach einer besonderen Ausführungsform des erfindungsgemäßen Verfahrens wird der Hohlraum durch ein gasförmiges oder flüssiges Medium, insbesondere Pressluft oder ein anderes Gas, mit einem hohen Druck - insbesondere einem höheren Druck als es dem Umgebungsdruck der Absperrvorrichtung entspricht - gefüllt.

Durch das unter hohem Druck stehende Medium werden die thermische Ankoppelung der Einrichtung zur Betätigung des Verschlusskörpers an den Verschlusskörper vermindert sowie gegebenenfalls etwaige Relativbewegungen zwischen der Einrichtung zur Betätigung und dem Verschlusskörper gedämpft.

Nach einer besonderen Ausführungsform des erfindungsgemäßen Verfahrens wird das Medium in dem Hohlraum im Wesentlichen auf einem konstanten Druckniveauinsbesondere über dem Umgebungsdruck der Absperrvorrichtung - gehalten.

Nach einer besonderen Ausführungsform des erfindungsgemäßen Verfahrens wird der Verschlusskörper, insbesondere während des Betriebes der Absperrvorrichtung, durch einen, vorzugsweise hydraulischen, Abstandhalter in seiner Lage und/oder Position in Richtung der Rotationsachse und/oder in einer Richtung normal dazu verändert.

Nach einer besonderen Ausführungsform der Erfindung handelt es sich bei der vorliegenden Absperrvorrichtung bzw. dem vorliegenden Ventil um ein sogenanntes "Floating Ball Design", welches im geschlossenen Zustand dem Ball (Verschlusskörper) die Möglichkeit gibt, sich gegen den druckabgewandten Sitz (Dichtelement) zu pressen.

Eine besondere Ausführungsform der Erfindung ist nachfolgend anhand mehrerer schematischer und nicht-einschränkender Zeichnungen dargestellt. Es zeigen:
Fig. 1 eine Absperrvorrichtung für heiße, gegebenenfalls mit feinen Feststoffpartikeln beladene, Gase
Fig. 2 eine Vorrichtung zur Lagerung eines Dichtelements zur Verwendung in einer Absperrvorrichtung für heiße, gegebenenfalls mit Feststoffpartikeln beladene, Gase
Fig. 3 einen Verschlusskörper mit einer Einrichtung zur Betätigung dieses Verschlusskörpers
Fig. 4 eine weitere bevorzugte Ausführungsform einer Absperrvorrichtung
Fig. 5 die Lagerung und Abdichtung der Vorrichtung zur Betätigung des Verschlusskörpers

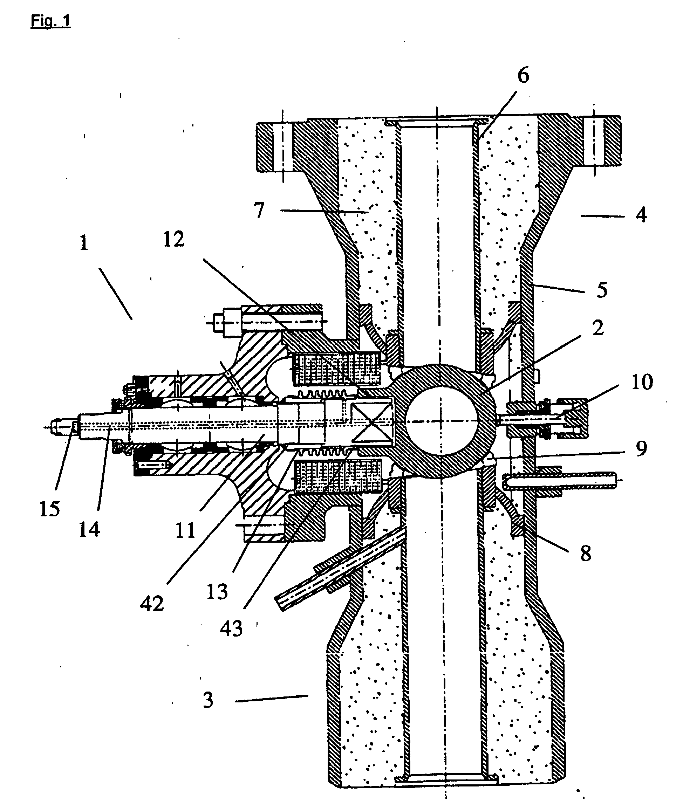

Nach Fig. 1 ist eine Absperrvorrichtung 1, insbesondere ein Absperrventil, dargestellt, die einen beweglichen sphäroidischen Verschlusskörper 2, sowie einen Einlassstutzen 3 und einen Auslassstutzen 4 aufweist. Dabei weist der Einlassstutzen 3 wie der Auslassstutzen 4 einen äußeren Mantel 5, vorzugsweise aus warmfesten Material, sowie einen Inliner 6 aus hochwarm- und verschleißfesten, insbesondere metallischem, Material auf. Zwischen dem Inliner 6 und dem äußeren Mantel 5 ist ein feuerfestes und/oder hochtemperaturbeständiges Material 7, insbesondere eine feuerfeste Ausmauerung, angeordnet, wodurch der äußere Mantel 5 von den im Bereich des Inliners 6 auftretenden Temperaturen zumindest teilweise isoliert bzw. geschützt wird.

Der Inliner 6 wird durch Verbindungselemente 8 am äußeren Mantel abgestützt und sorgt so für einen Schutz sowie für eine Stabilisierung des feuerfesten Materials. An den Verbindungselementen 8 liegen Dichtelemente 9 an, die wiederum an den Verschlusskörper 2 anschließen und so eine Abdichtwirkung ermöglichen.

Der Verschlusskörper wird an einer Seite durch einen Abstandshalter (Ballstopper) 10 in Position gehalten, wobei der Abstandshalter 10, der beispielsweise hydraulisch betätigt wird, auch bei hoher Temperatur, insbesondere während des Betriebes der Absperrvorrichtung 1 verstellt werden kann.

Auf der anderen Seite des Verschlusskörpers 2 greift eine Welle 11 in eine Ausnehmung 12 an dem Verschlusskörper ein. Dabei ist die Ausnehmung 12 derart gestaltet, dass die Welle 11 bei geöffnetem Ventil in Richtung der Flussrichtung des Gases schlüssig, insbesondere formschlüssig, mit dem Verschlusskörper 2 verbunden ist.

Die Welle 11 ist, wie in Fig. 1 dargestellt, an einer Stelle 42 mit einem Wellenbalg 13 verbunden, insbesondere verschweißt, wobei der Wellenbalg 13 an einer anderen Stelle 43 wiederum mit dem Verschlusskörper 2, vorzugsweise gasdicht, verbunden, insbesondere verschweißt, ist. Durch den Wellenbalg 13, der somit den vorderen Teil der Welle 11 sowie die Verbindung zwischen Welle und Verschlusskörper abdichtet, wird einerseits verhindert dass Partikel in die Ausnehmung 12 des Verschlusskörpers 2 eingetragen werden, sowie andererseits dass die Welle 11, insbesondere der vordere Teil der Welle, direkt den heißen und staubbeladenen Gasen ausgesetzt wird.

Der Wellenbalg 13 selbst besteht nach einer besonderen Ausführungsform aus mehreren zusammengefügten und gefalteten Blechen und weist nach einer besonders bevorzugten Ausführungsform eine Federwirkung auf.

Die Welle 11 ist weiters mit einer Ausbohrung 14 versehen, die durch die gesamte Welle reicht, und die an einem Ende mit einem gasdichten Verschluss 15 abgeschlossen wird. In die Ausbohrung der Welle wird Gas eingebracht, sodass sich in dem resultierenden Hohlraum ein Atmosphärenüberdruck bildet. Da die Welle 11 in Richtung der Wellenachse zumeist nicht an dem Verschlusskörper 2 anliegt, bildet sich in der Ausnehmung 12 zwischen der Welle 11 und dem Verschlusskörper 2 und/oder dem Wellenbalg 13 ein Gaspolster, der etwaige Erschütterungen und Bewegungen dämpft. Durch diesen Gaspolster wird die Welle 11 gegenüber dem Verschlusskörper 2 zumindest teilweise thermisch isoliert.

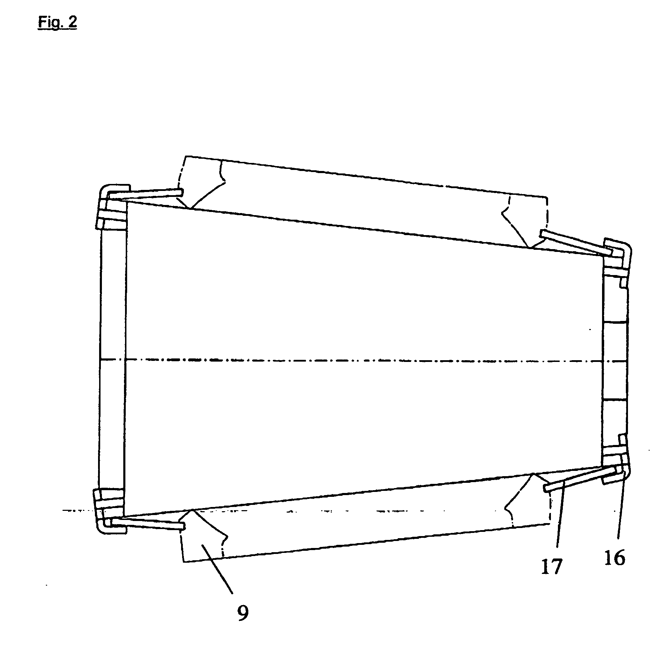

In Fig. 2 ist eine Ausführungsform einer Fixierung des Dichtelements 9 dargestellt. Dabei wird das Dichtelement 9 durch einen Stützring 16 mittels einer oder mehrerer Tellerfedern 17 in Position gehalten.

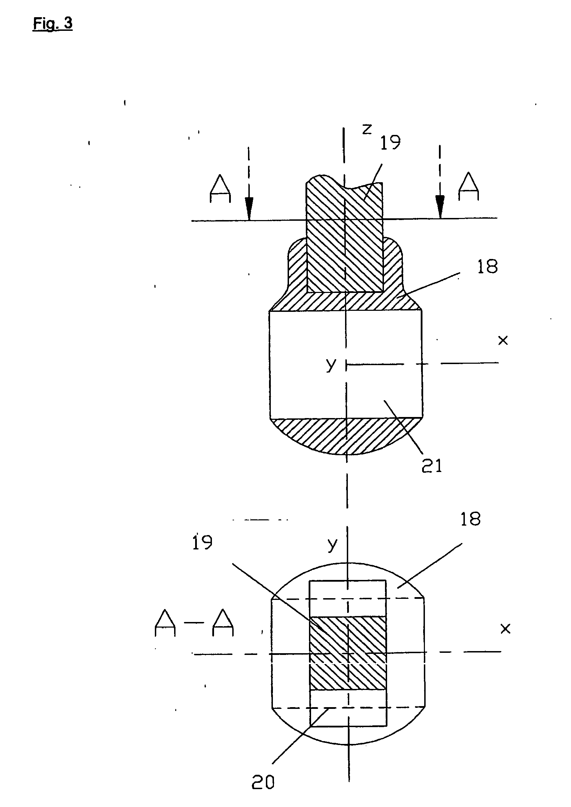

Nach Fig. 3 ist ein sphäroidischer Verschlusskörper 18 mit einer Einrichtung zur Betätigung des Verschlusskörpers, insbesondere einer Welle 19, dargestellt. Es ist aus dieser Darstellung ersichtlich, dass der Verschlusskörper eine Ausnehmung 20 aufweist, in welche die Einrichtung 19 zur Betätigung des Verschlusskörpers eingreift. Weiters ist ersichtlich, dass die Welle in einer Richtung x schlüssig mit dem Verschlusskörper verbunden ist, während in einer Richtung y, insbesondere in einer Richtung normal zu der Richtung der schlüssigen Verbindung, der Verschlusskörper relativ zur Einrichtung zur Betätigung des Verschlusskörpers beweglich ist. Damit ist eine optimale Anstellung des Verschlusskörpers gegenüber dem Dichtelement gewährleistet, die insbesondere bei, vorzugsweise an dem Dichtelement und/oder an dem Verschlusskörper selbst, auftretenden Ablagerungen von großer Wichtigkeit ist. Der Verschlusskörper 18 kann durch die Einrichtung zur Betätigung des Verschlusskörpers 19 um eine Rotationsachse z verdreht werden. Nach einer bevorzugten Ausführungsform der Erfindung entspricht die Richtung der Achse x, welche die Richtung der schlüssigen Verbindung des Verschlusskörpers mit der Einrichtung zur Betätigung des Verschlusskörpers darstellt, der Richtung des Durchtrittes des Durchflußkanales 21 durch die Verschlusseinrichtung 18.

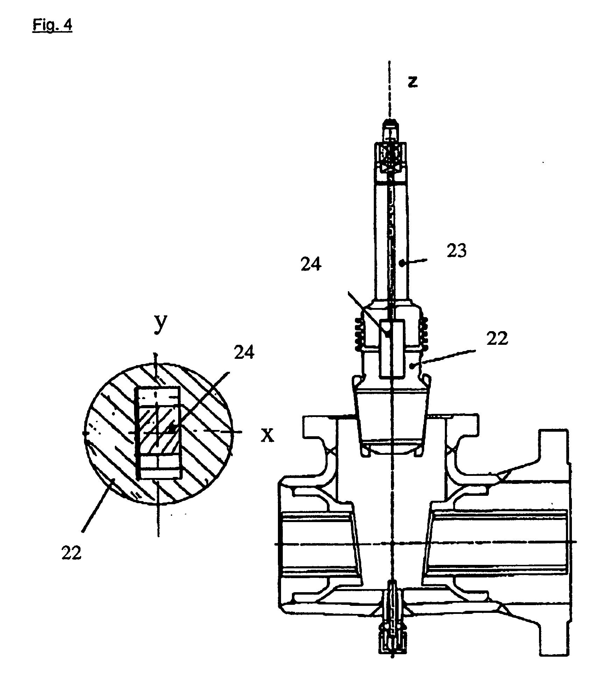

Nach Fig. 4 ist eine weitere besondere Ausführungsform einer Absperrvorrichtung dargestellt, wobei die Verbindung zwischen Verschlusskörper und einer Einrichtung zur Betätigung diese Verschlusskörpers mittels eines losen, in einer Richtung (x) formschlüssig wirkenden und in (y) und (z) verschiebbaren Zwischenstückes hergestellt wird. Wie aus der Fig. 4 ersichtlich ist, wurde der besseren Übersichtlichkeit wegen der sphäroidische Verschlusskörper 22 mit seiner ihn betätigenden Einrichtung 23 getrennt und außerhalb der eigentlichen Absperrvorrichtung, insbesondere dem zu verschließenden Kanal und den entsprechenden Dichtelementen, dargestellt. Wie weiters aus Fig. 4 ersichtlich ist, befindet sich gegenüber der Einrichtung zur Betätigung des Verschlusskörpers an der Absperrvorrichtung, insbesondere an dem Absperrkanal, ein Abstandshalter. In Fig. 4 ist ein sphäroidischer Verschlusskörper 22 mit einer Einrichtung zur Betätigung des Verschlusskörpers 23, insbesondere einer Welle, dargestellt. Es ist aus der dieser Darstellung ersichtlich, dass zwischen der Ausnehmung im Verschlusskörper 22 und der Einrichtung zur Betätigung des Verschlusskörpers 23 ein Zwischenstück 24 eingreift. Weiters ist ersichtlich, dass die Welle in einer Richtung x schlüssig mit dem Verschlusskörper verbunden ist, während in einer Richtung y, insbesondere in einer Richtung normal zu der Richtung x der schlüssigen Verbindung, der Verschlusskörper relativ zur Einrichtung zur Betätigung des Verschlusskörpers bewegt werden kann. Damit ist eine optimale Positionierung des Verschlusskörpers gegenüber dem Dichtelement gewährleistet, die insbesondere bei auftretenden Ablagerungen, vorzugsweise an dem Dichtelement und/oder an dem Verschlusskörper selbst, sowie zur Aufnahme der Temperaturdehnungen von großer Wichtigkeit ist. Der Verschlusskörper 22 kann über das Zwischenstück 24 durch die Einrichtung zur Betätigung des Verschlusskörpers 23 um eine Rotationsachse z verdreht werden. Nach einer bevorzugten Ausführungsform der Erfindung entspricht die Richtung der Achse x, welche die Richtung der schlüssigen Verbindung des Verschlusskörpers mit der Einrichtung zur Betätigung des Verschlusskörpers darstellt, der Richtung des Durchtrittes des Durchflußkanales durch die Verschlusseinrichtung 22. Durch die Ausführung mit Zwischenstück ergibt sich der Vorteil, dass die Einrichtung zur Betätigung (Welle) thermisch vom Verschlusselement entkoppelt wird und somit die Wärmeleitung in die Welle und damit in die Stopfbuchse und Lagerung der Welle verringert wird.

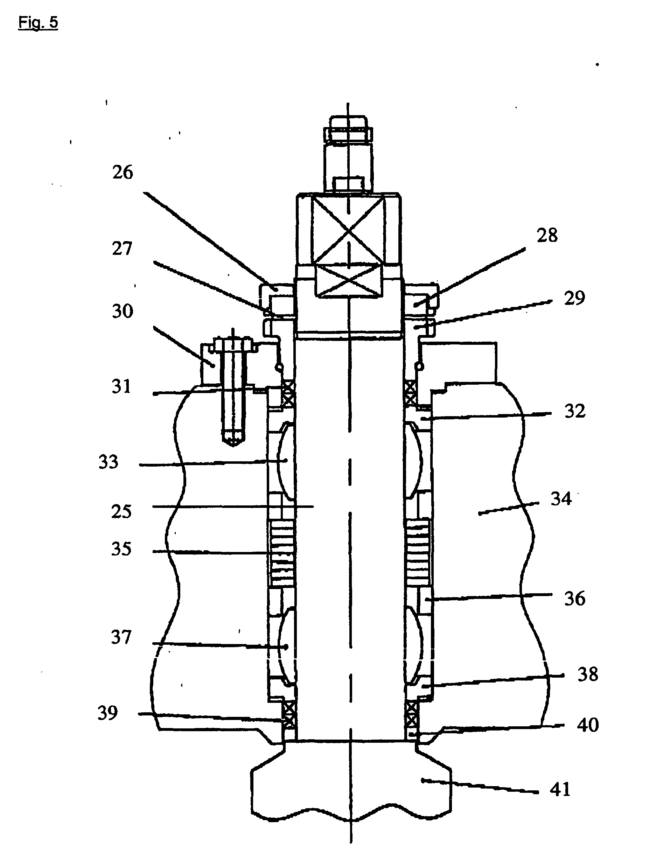

Nach Fig. 5 ist die Abdichtung und Lagerung der Einrichtung zur Betätigung des Verschlusskörpers dargestellt.
Aus der Darstellung sind 2 Dichtungspackungen ersichtlich. Die notwendige Pressung der Dichtungspackungen wird mit einer Verstellmutter aufgebracht, welche an der oberen Dichtungspackung wirkt. Die Kraftverteilung zwischen der oberen Dichtungspackung und der unteren Dichtungspackung wird über ein zentral angeordnetes Tellerfederpaket erreicht. Über Abstandhalter werden auch die beiden Kugellager in Position gehalten. Die Tellerfederpackung bewirkt, dass die Vorspannung der Dichtungspackung auch bei Temperaturdehnung der Welle in Achsrichtung gewährleistet ist, ohne die Verstellmutter ständig an die Betriebszustände anzupassen. Dargestellt sind im einzelnen die Einrichtung zur Betätigung des Verschlusskörpers 25, sowie ein Sicherungsblech 26, eine Druckscheibe 27, eine Verschlussmutter 28, eine Spannmutter 29, eine Flacheisenverankerung 30, eine erste Dichtungspackung 31, eine Druckscheibe 32, ein erstes Kugellager 33, ein Schutzkäfig 34, eine Federpackung 35, einen Abstandshalter 36, ein weiteres Kugellager 37, eine weitere Druckscheibe 38, eine weitere Dichtungspackung 39, einen weiteren Abstandshalter 40, sowie die Einrichtung zur Betätigung des Verschlusskörpers 41, insbesondere die Welle, selbst.

## Patentansprüche

1. Absperrvorrichtung zum Absperren und/oder Abdichten einer Leitung zum Transport von, vorzugsweise heißen, Medien, insbesondere staubbeladenen Gasen, vorzugsweise zur Absperrung und/oder Abdichtung einer Leitung zum Transport heißer, gegebenenfalls mit Feststoffpartikel beladener, Gase, mit einem beweglichen Verschlusskörper (2) und mindestens einem Dichtelement (9), insbesondere einem Sitzring, an dem der Verschlusskörper in Sperrstellung anliegt, und mit einer Einrichtung zur Rotation des Verschlusskörpers (11) um eine Rotationsachse, insbesondere einer Welle, mit welcher der Verschlusskörper verbunden ist, **dadurch gekennzeichnet, dass** der Verschlusskörper durch eine geeignete flexible Anlenkung an die Einrichtung zur Rotation des Verschlusskörpers in Richtung der Rotationsachse und in einer Richtung normal dazu - an dem Dichtelement gleitend - bewegbar gelagert ist, wobei die Position und/oder die Lage des Verschlusskörpers (3), vorzugsweise in Richtung der Wellenachse, durch einen, insbesondere an dem Verschlusskörper an einem Punkt in Richtung der Wellenachse angreifenden, während des Betriebes, insbesondere hydraulisch, betätigbaren Abstandhalter (10) veränderbar ist.

2. Absperrvorrichtung nach Anspruch 1, **dadurch gekennzeichnet, dass** an der Einrichtung zur Rotation des Verschlusskörpers (11) eine, vorzugsweise flexible, Dichtung (13), insbesondere ein Wellenbalg, angeordnet ist, die einerseits mit der Einrichtung zur Rotation des Verschlusskörpers (11) und andererseits mit dem Verschlusskörper (2) jeweils in einer Weise verbunden ist, dass die Verbindungsstelle zwischen dem Verschlusskörper und der ihn rotierenden Einrichtung durch die Dichtung abdichtbar ist.

3. Absperrvorrichtung nach Anspruchs, wobei der Verschlusskörper (2) an einer Seiteeine Ausnehmung (12) aufweist, in welche die Einrichtung zur Rotation des Verschlusskörpers (11), insbesondere die Welle, eingreift, **dadurch gekennzeichnet, dass** die Dichtung (13), insbesondere der Wellenbalg, derart angeordnet ist, dass ein Eintrag von Feststoffpartikeln in die Ausnehmung (12) des Verschlusskörpers (2), insbesondere im Bereich des Eingriffes der Einrichtung zur Rotation des Verschlusskörpers in die Ausnehmung des Verschlusskörpers, verhinderbar ist.

4. Absperrvorrichtung nach Anspruch 2 oder 3, **dadurch gekennzeichnet, dass** die Dichtung (13) den vorderen, dem Verschlusskörper (2) zugewandten Teil der Einrichtung zur Rotation des Verschlusskörpers, insbesondere der Welle, zumindest teilweise gasdicht abschließt.

5. Absperrvorrichtung nach einem oder mehreren der Ansprüche 2 bis 4, **dadurch gekennzeichnet, dass** an der Einrichtung zur Rotation des Verschlusskörpers, insbesondere der Welle (11), ein Hohlraum (14), insbesondere eine Bohrung, vorgesehen ist, der mindestens zwei Öffnungen aufweist, wobei eine erste Öffnungen im vorderen, dem Verschlusskörper (2) zugewandten Teil der Einrichtung zur Rotation des Verschlusskörpers, insbesondere der Welle (11), angeordnet ist.

6. Absperrvorrichtung nach Anspruch 5, **dadurch gekennzeichnet, dass** die erste Öffnung im Bereich der abgedichteten Verbindung des Verschlusskörpers mit der den Verschlusskörper rotierenden Einrichtung angeordnet ist.

7. Absperrvorrichtung nach Anspruch 5 oder 6, **dadurch gekennzeichnet, dass** eine zweite Öffnung des Hohlraumes durch einen Verschluss, insbesondere gasdicht, verschließbar ist.

8. Absperrvorrichtung nach einem oder mehreren der Ansprüche 1 bis 7, wobei der Verschlusskörper (2) zumindest teilweise sphäroid und drehbar ausgeführt ist und gegebenenfalls einen Durchflusskanal aufweist.

9. Absperrvorrichtung nach einem oder mehreren der Ansprüche 1 bis 8 mit je einem, an dem entsprechenden Ende des Absperrventiles angeordneten und gegebenenfalls miteinander fluchtenden, Einlass- (3) und Auslassstutzen (4), die jeweils einen äußeren und inneren Durchmesser aufweisen, **dadurch gekennzeichnet, dass** der äußere Durchmesser durch einen metallischen Mantel (5) und der innere Durchmesser durch einen, gegebenenfalls metallischen, Inliner (6) gebildet werden, wobei zwischen dem Inliner (6) und dem metallischen Mantel (5) ein Isoliermaterial (7) zur Temperaturisolierung, insbesondere ein Feuerfestmaterial, besonders bevorzugt eine Ausmauerung aus Feuerfestmaterial, angeordnet ist.

10. Absperrvorrichtung nach Anspruch 9, **dadurch gekennzeichnet, dass** zwischen dem metallischen Mantel (5) und dem Inliner (6), vorzugsweise im Bereich des Absperrventiles, ein Verbindungselement (8), zur Abstützung des Inliners (6) an dem metallischen Mantel (5), vorgesehen ist, und gegebenenfalls das Verbindungselement (8) an dem Dichtelement (9) anliegt und dieses zumindest teilweise abstützt.

11. Absperrvorrichtung nach einem oder mehreren der Ansprüche 9 oder 10, **dadurch gekennzeichnet, dass** ein Fixierelement (17), beispielsweise eine Tellerfeder, vorgesehen ist, mit welcher das Dichtelement (9) flexibel und/oder federnd gelagert ist.

12. Verfahren zum Betrieb einer Absperrvorrichtung zur Absperrung und/oder Abdichtung einer Leitung zum Transport von, vorzugsweise heißen, Medien, insbesondere staubbeladenen Gasen, vorzugsweise zur Absperrung und/oder Abdichtung einer Leitung zum Transport heißer, gegebenenfalls mit Feststoffpartikel beladener, Gase, mit einem beweglichen Verschlusskörper (2) und mindestens einem Dichtelement (9), insbesondere einem Sitzring, an welchen der Verschlusskörper bei Sperrung der Leitung angelegt wird, und mit einer Einrichtung zur Betätigung des Verschlusskörpers (11), insbesondere einer Welle, mit welcher der Verschlusskörper verbunden ist und mit welcher der Verschlusskörper bei Sperrung der Leitung durch Rotation um eine Rotationsachse betätigt und an das Dichtelement angelegt wird, **dadurch gekennzeichnet, dass** der Verschlusskörper durch eine geeignete flexible Anlenkung an die Einrichtung zur Betätigung des Verschlusskörpers in Richtung der Rotationsachse und in einer Richtung normal dazu - an dem Dichtelement frei gleitend - bewegt wird, wobei der Verschlusskörper, insbesondere während des Betriebes der Absperrvorrichtung, durch einen, vorzugsweise hydraulischen, Abstandhalter in seiner Lage und/oder Position in Richtung der Rotationsachse und/oder in einer Richtung normal dazu verändert wird.

13. Verfahren nach Anspruch 12, **dadurch gekennzeichnet, dass** die Verbindungsstelle zwischen dem Verschlusskörper und der Einrichtung zur Betätigung des Verschlusskörpers durch eine, vorzugsweise flexible, Dichtung, insbesondere einen Wellenbalg, gegenüber der Umgebung, insbesondere zur Verhinderung des Eintrittes von Verunreinigungen, abgedichtet wird.

14. Verfahren nach Anspruch 12 oder 13, **dadurch gekennzeichnet, dass** an der Einrichtung zur Betätigung des Verschlusskörpers, insbesondere der Welle, ein Hohlraum, insbesondere eine Bohrung, angebracht wird, der mindestens zwei Öffnungen aufweist, wobei eine erste Öffnung im vorderen, dem Verschlusskörper zugewandten Teil der Einrichtung zur Betätigung des Verschlusskörpers, insbesondere der Welle, angeordnet wird.

15. Verfahren nach Anspruch 14, **dadurch gekennzeichnet, dass** die erste Öffnung im Bereich der abgedichteten Verbindung des Verschlusskörpers mit der ihn betätigenden Einrichtung angeordnet wird.

16. Verfahren nach Anspruch 14 oder 15, **dadurch gekennzeichnet, dass** eine zweite Öffnung des Hohlraumes durch einen Verschluss, insbesondere gasdicht, verschlossen wird.

17. Verfahren nach einem oder mehreren der Ansprüche 14 bis 16, **dadurch gekennzeichnet, dass** der Hohlraum durch ein Medium mit einem höheren Druckals dem Umgebungsdruck der Absperrvorrichtung entspricht - gefüllt wird.

18. Verfahren nach Anspruch 17, **dadurch gekennzeichnet, dass** das Medium in dem Hohlraum im Wesentlichen auf einem konstanten Druckniveau - über dem Umgebungsdruck der Absperrvorrichtung - gehalten wird.

## Claims

1. Blocking apparatus for blocking and/or sealing off a line for transporting - preferably hot - media, in particular dust-laden gases, preferably for blocking and/or sealing off a line for transporting hot gases which may be laden with solid particles, having a movable closure body (2) and at least one sealing element (9), in particular a seat ring, against which the closure body bears in the blocking position, and having a device for rotating the closure body (11) about an axis of rotation, in particular a shaft, to which the closure body is connected, **characterized in that** the closure body, by means of a suitable flexible linkage to the device for rotating the closure body, is mounted such that it can move in the direction of the axis of rotation and in a direction which is perpendicular with respect thereto, such that it slides on the sealing element, it being possible to alter the position and/or location of the closure body (3), preferably in the direction of the shaft axis, by a spacer (10) which acts in particular on the closure body at a point in the direction of the shaft axis and can be actuated, in particular hydraulically, during operation.

2. Blocking apparatus according to Claim 1, **characterized in that** a - preferably flexible - seal (13), in particular a bellows, which on the one hand is connected to the device for rotating the closure body (11) and on the other hand is connected to the closure body (2), in each case in such a manner that the connecting location between the closure body and the device which rotates it can be sealed off by the seal, is arranged at the device for rotating the closure body (11).

3. Blocking apparatus according to Claim 2, in which the closure body (2) on one side has a recess (12) in which the device for rotating the closure body (11), in particular the shaft, engages, **characterized in that** the seal (13), in particular the bellows, is arranged in such a manner that it is possible to prevent solid particles from being introduced into the recess (12) in the closure body (2), in particular in the region where the device for rotating the closure body engages in the recess in the closure body.

4. Blocking apparatus according to Claim 2 or 3, **characterized in that** the seal (13) at least partially seals off, in a gastight manner, the front part, facing the closure body (2), of the device for rotating the closure body, in particular the shaft.

5. Blocking apparatus according to one or more of Claims 2 to 4, **characterized in that** a cavity (14), in particular a bore, which has at least two openings, a first opening being arranged in the front part, facing the closure body (2), of the device for rotating the closure body, in particular the shaft (11), is provided at the device for rotating the closure body, in particular the shaft (11).

6. Blocking apparatus according to Claim 5, **characterized in that** the first opening is arranged in the region of the sealed connection between the closure body and the device which rotates the closure body.

7. Blocking apparatus according to Claim 5 or 6, **characterized in that** a second opening of the cavity can be closed off, in particular in a gastight manner, by a closure.

8. Blocking apparatus according to one or more of Claims 1 to 7, in which the closure body (2) is of at least partially spheroidal and rotatable design and if appropriate has a through-flow passage.

9. Blocking apparatus according to one or more of Claims 1 to 8, having in each case one inlet connection piece (3) and outlet connection piece (4), arranged at the corresponding end of the blocking valve and if appropriate aligned with one another, which each have an external and internal diameter, **characterized in that** the external diameter is formed by a metallic shell (5) and the internal diameter is formed by an - optionally metallic - inliner (6), an insulating material (7) for thermal insulation, in particular a refractory material, particularly preferably a refractory lining made from refractory material, being arranged between the inliner (6) and the metallic shell (5).

10. Blocking apparatus according to Claim 9, **characterized in that** a connecting element (8), for supporting the inliner (6) on the metallic shell (5), is provided between the metallic shell (5) and the inliner (6), preferably in the region of the blocking valve, and if appropriate the connecting element (8) bears against the sealing element (9) and at least partially supports the latter.

11. Blocking apparatus according to Claim 9 or 10, **characterized in that** a fixing element (17), for example a disc spring, is provided, by means of which the sealing element (9) is flexibly and/or resiliently mounted.

12. Method for operating a blocking apparatus for blocking and/or sealing off a line for transporting - preferably hot - media, in particular dust-laden gases, preferably for blocking and/or sealing off a line for transporting hot gases which may be laden with solid particles, having a movable closure body (2) and at least one sealing element (9), in particular a seat ring, against which the closure body is placed when the line is being blocked, and having a device for actuating the closure body (11), in particular a shaft, to which the closure body is connected and by means of which the closure body is actuated and placed against the sealing element when the line is being blocked by rotation about an axis of rotation, **characterized in that** the closure body, by means of a suitable flexible linkage to the device for actuating the closure body, is moved in the direction of the axis of rotation and in a direction which is perpendicular with respect thereto, such that it slides freely on the sealing element, the location and/or position of the closure body being altered in the direction of the axis of rotation and/or in a direction which is perpendicular with respect thereto, in particular during operation of the blocking apparatus, by a - preferably hydraulic - spacer.

13. Method according to Claim 12, **characterized in that** the connecting location between the closure body and the device for actuating the closure body is sealed off with respect to the environment, in particular so as to prevent the ingress of impurities, by a - preferably flexible - seal, in particular a bellows.

14. Method according to Claim 12 or 13, **characterized in that** a cavity, in particular a bore, which has at least two openings, a first opening being arranged in the front part, facing the closure body, of the device for actuating the closure body, in particular the shaft, is arranged at the device for actuating the closure body, in particular the shaft.

15. Method according to Claim 14, **characterized in that** the first opening is arranged in the region of the sealed connection between the closure body and the device which actuates it.

16. Method according to Claim 14 or 15, **characterized in that** a second opening of the cavity is closed off, in particular in a gastight manner, by a closure.

17. Method according to one or more of Claims 14 to 16, **characterized in that** the cavity is filled by a medium at a higher pressure than the ambient pressure surrounding the blocking apparatus.

18. Method according to Claim 17, **characterized in that** the medium in the cavity is held substantially at a constant pressure level which is above the ambient pressure surrounding the blocking apparatus.

## Revendications

1. Dispositif de fermeture qui ferme et/ou rend étanche un conduit de transport de fluides de préférence chauds, en particulier de gaz chargés de poussières, et de préférence qui ferme et/ou rend étanche un conduit de transport de gaz chauds éventuellement chargés de particules solides, et qui présente un corps mobile de fermeture (2) et au moins un élément d'étanchéité (9), en particulier une bague de siège sur laquelle le corps de fermeture repose lorsqu'il est en position de fermeture, et un dispositif de mise en rotation du corps de fermeture (11) autour d'un axe de rotation, en particulier un arbre auquel le corps de fermeture est relié,
**caractérisé en ce que** par une articulation souple appropriée, le corps de fermeture est monté à rotation sur le dispositif de mise en rotation du corps de fermeture dans la direction de l'axe de rotation et dans une direction transversale par rapport à cet axe tout en coulissant sur l'élément d'étanchéité, la position du corps de fermeture (3), de préférence dans la direction de l'axe de l'arbre, pouvant être modifiée par un écarteur (10) qui s'engage sur le corps de fermeture, en particulier en un point situé dans la direction de l'axe de l'arbre, et qui peut être actionné en particulier par des moyens hydrauliques pendant le fonctionnement.

2. Dispositif de fermeture selon la revendication 1, **caractérisé en ce qu'**un joint d'étanchéité (13), de préférence flexible, en particulier un soufflet ondulé, est disposé sur le dispositif de mise en rotation du corps de fermeture (11) et est relié d'une part au dispositif de mise en rotation du corps de fermeture (11) et d'autre part au corps de fermeture (2), chaque fois d'une manière telle que l'emplacement de liaison entre 1e corps de fermeture et 1e dispositif qui le fait tourner puisse être rendu étanche par le joint d'étanchéité.

3. Dispositif de fermeture selon la revendication 2, dans lequel le corps de fermeture (2) présente sur un côté une découpe (12) dans laquelle s'engage le dispositif de mise en rotation du corps de fermeture (11), en particulier l'arbre, **caractérisé en ce que** le joint d'étanchéité (13), en particulier le soufflet ondulé, est disposé de manière à pouvoir empêcher la pénétration de particules solides dans la découpe (12) du corps de fermeture (2) et en particulier dans la zone de l'engagement du dispositif de mise en rotation du corps de fermeture dans 1a découpe du corps de fermeture.

4. Dispositif de fermeture selon les revendications 2 ou 3, **caractérisé en ce que** le joint d'étanchéité (13) ferme de manière au moins en partie étanche au gaz la partie avant, orientée vers le corps de fermeture (2), du dispositif de mise en rotation du corps de fermeture et en particulier de l'arbre.

5. Dispositif de fermeture selon l'une ou plusieurs des revendications 2 à 4, **caractérisé en ce qu'**un espace creux (14), en particulier un alésage, est prévu sur le dispositif de mise en rotation du corps de fermeture, en particulier l'arbre (11), et présente au moins deux ouvertures dont une première est disposée dans 1a partie avant, orientée vers 1e corps de fermeture (2), du dispositif de mise en rotation du corps de fermeture et en particulier de l'arbre (11).

6. Dispositif de fermeture selon la revendication 5, **caractérisé en ce que** la première ouverture est disposée dans 1a zone de 1a liaison étanche du corps de fermeture au dispositif de mise en rotation du corps de fermeture.

7. Dispositif de fermeture selon les revendications 5 ou 6, **caractérisé en ce qu'**une deuxième ouverture de l'espace creux peut être fermée par une fermeture, en particulier de manière étanche.

8. Dispositif de fermeture selon l'une ou plusieurs des revendications 1 à 7, dans lequel de corps de fermeture (2) est au moins en partie sphéroïdal et rotatif et présente éventuellement un canal de traversée.

9. Dispositif de fermeture selon l'une ou plusieurs des revendications 1 à 8, qui présente une tubulure d'entrée (3) et une tubulure de sortie (4) disposées aux extrémités respectives de la soupape de fermeture, éventuellement alignées l'une sur l'autre et qui présentent chacune un diamètre intérieur et un diamètre extérieur, **caractérisé en ce que** le diamètre extérieur est formé par une enveloppe métallique (5) et le diamètre intérieur par une garniture intérieure (6) éventuellement métallique, un matériau isolant (7) d'isolation thermique, en particulier un matériau réfractaire et de manière particulièrement préférable une maçonnerie en matériau réfractaire, étant disposé entre 1a garniture intérieure (6) et l'enveloppe métallique (5).

10. Dispositif de fermeture selon la revendication 9, **caractérisé en ce que** de préférence dans la zone de la soupape de fermeture, un élément de liaison (8) est prévu entre l'enveloppe métallique (5) et la garniture intérieure (6) pour soutenir la garniture intérieure (6) sur l'enveloppe métallique (5), l'élément de liaison (8) reposant éventuellement sur l'élément d'étanchéité (9) et soutenant ce dernier au moins en partie.

11. Dispositif de fermeture selon l'une ou plusieurs des revendications 9 ou 10, **caractérisé en ce qu'**un élément de fixation (17), par exemple une rondelle-ressort, est prévu pour monter l'élément d'étanchéité (9) de manière flexible et/ou élastique.

12. Procédé d'utilisation d'un dispositif de fermeture qui ferme et/ou rend étanche un conduit de transport de fluides de préférence chauds, en particulier de gaz chargés de poussières, et de préférence qui ferme et/ou rend étanche un conduit de transport de gaz chauds éventuellement chargés de particules solides et qui présente un corps mobile de fermeture (2) et au moins un élément d'étanchéité (9), en particulier une bague de siège sur laquelle le corps de fermeture repose lorsqu'il ferme le conduit, et un dispositif d'actionnement du corps de fermeture (11), en particulier d'un arbre auquel le corps de fermeture est relié, par lequel le corps de fermeture est mis en rotation autour d'un axe de rotation lors de la fermeture du conduit et sur lequel l'élément d'étanchéité est placé, **caractérisé en ce que** par une articulation souple appropriée, le corps de fermeture est déplacé sur le dispositif d'actionnement du corps de fermeture dans la direction de l'axe de rotation et dans une direction perpendiculaire à cet axe tout en coulissant librement sur l'élément d'étanchéité, la position du corps de fermeture, de préférence dans la direction de l'axe de rotation et/ou dans une direction perpendiculaire à celle-ci, pouvant être modifiée par un écarteur de préférence hydraulique, en particulier pendant le fonctionnement du dispositif de fermeture.

13. Procédé selon la revendication 12, **caractérisé en ce que** l'emplacement de liaison entre le corps de fermeture et le dispositif d'actionnement du corps de fermeture est rendu étanche vis-à-vis de l'environnement, en particulier pour empêcher la pénétration d'impuretés, par un joint d'étanchéité de préférence flexible, en particulier un soufflet ondulé.

14. Procédé selon les revendications 12 ou 13, **caractérisé en ce qu'**un espace creux, en particulier un alésage, est prévu sur le dispositif d'actionnement du corps de fermeture, en particulier l'arbre, et présente au moins deux ouvertures dont une première est disposée dans la partie avant, orientée vers le corps de fermeture, du dispositif d'actionnement du corps de fermeture et en particulier de l'arbre.

15. Procédé selon la revendication 14, **caractérisé en ce que** la première ouverture est disposée dans la zone de la liaison étanche du corps de fermeture au dispositif qui l'actionne.

16. Procédé selon les revendications 14 ou 15, **caractérisé en ce qu'**une deuxième ouverture de l'espace creux est fermée par une fermeture, en particulier de manière étanche.

17. Procédé selon l'une ou plusieurs des revendications 14 à 16, **caractérisé en ce** l'espace creux est rempli d'un fluide à pression plus élevée que celle qui correspond à 1a pression ambiante du dispositif de fermeture.

18. Procédé selon la revendication 17, **caractérisé en ce que** le fluide présent dans l'espace creux est maintenu à un niveau de pression essentiellement constant, supérieur à la pression ambiante du dispositif de fermeture.
